# EUROPEAN PATENT APPLICATION

(11) **EP 4 306 265 A2**
(43) Date of publication of application: **17.01.2024**
(21) Application number: 23179819.0
(22) Date of filing: 16.06.2023
(51) Int. Cl.: B25F 5/00

(54) **SHEAR CUTTING TOOL**

(30) Priority: 17.06.2022 US 202263366580 P
(71) Applicant: Milwaukee Electric Tool Corporation, Brookfield, WI 53005 (US)
(72) Inventor: RENTMEESTER, Mathew R., Milwaukee, 53222 (US); REEVE, John N., Milwaukee, 53202 (US); GARCES, Daniel R., Waukesha, 53189 (US); MACH, Brennan L., Milwaukee, 53202 (US); FREY, Adam C., Racine, 53402 (US); SNYDER, Harry, Brookfield, 53005 (US)
(74) Representative: Forresters IP LLP

(57) **Abstract**

A shear cutting tool includes a housing, a hydraulic drive assembly at least partially supported in the housing, and a head assembly coupled to the housing. The housing has a first end, second end, base portion, and a handle extends from the housing. The handle supports a trigger. The hydraulic drive assembly is activated by the trigger and is configured to move a movable die relative to a stationary die. The head assembly is coupled to the second end of the housing and includes a clevis that supports the movable and stationary dies, a plurality of extensions, and a stop plate with a lower face. The extensions are coupled to the clevis and the stop plate is coupled to the extensions. The clevis has a support portion that, together with the lower face and the base portion, define a support plane.

## Description

### CROSS-REFERENCE TO RELATED APPLICATIONS

This application claims priority to U.S. Provisional Patent Application No. 63/366,580, filed on June 17, 2022, the entire content of which is incorporated herein by reference.

### FIELD

The present disclosure relates to a power tool, in particular, a cutting tool configured for shear cutting.

### BACKGROUND

Metallic strut channel is frequently used for construction in industrial application, including for mounting and supporting plumbing and electrical cable. The strut channel is often cut to custom lengths for different applications. A band saw is one common tool used for cutting strut channel, however, the cutting operation performed by a band saw has several downsides, including the creation of metallic dust and debris. The present disclosure provides a shear cutting tool that performs a shear cutting operation on metallic strut channel.

### SUMMARY

The present disclosure provides, in one aspect, a shear cutting tool configured to perform a shear cutting operation on a workpiece by sliding a movable die relative to a stationary die along a shear plane. The shear cutting tool includes a housing, a hydraulic drive assembly at least partially supported in the housing, and a head assembly coupled to the housing. The housing has a first end and a second end, and a handle extends from the housing. The handle supports a trigger. The hydraulic drive assembly is activated by the trigger and is configured to move the movable die relative to the stationary die. The head assembly is coupled to the second end of the housing and includes a clevis that supports the movable and stationary dies, a plurality of extensions, and a stop plate. The extensions are coupled to the clevis and a stop plate is coupled to the extensions. The stop plate has a lower face. The clevis has a support portion that, together with the lower face of the stop plate and the first end of the housing, define a support plane.

The present disclosure provides, in another aspect, a shear cutting tool configured to perform a shear cutting operation on a workpiece by sliding a movable die relative to a stationary die. The shear cutting tool includes a housing, a hydraulic drive assembly at least partially supported in the housing, a head assembly coupled to the housing, and a coupling assembly. The housing has a first end and a second end and a handle extends from the housing. The handle supports a trigger. The hydraulic drive assembly is activated by the trigger and is configured to move the movable die. The hydraulic drive assembly includes a ram. The head assembly is coupled to the second end of the housing and includes a clevis that supports the movable and stationary dies. The clevis has a support portion. The coupling assembly includes a return arm that is coupled to the ram by a shoulder bolt disposed in a counterbored hole in the return arm. A spring disposed in the counterbored hole engages the shoulder bolt and the return arm to bias the return arm into a lower position in which the movable die is engaged.

The present disclosure provides, in another aspect, a shear cutting tool configured to perform a shear cutting operation on a workpiece by sliding a movable die relative to a stationary die. The shear cutting tool includes a housing, a head assembly coupled to the housing, and a worklight supported in the housing. A handle extends from the housing and supports a trigger. The head assembly supports the movable and stationary dies. The worklight is disposed adjacent the head assembly and directs light toward the stationary die or the movable die.

The present disclosure provides, in another aspect, a shear cutting tool configured to perform a shear cutting operation on a workpiece by sliding a movable die relative to a stationary die. The shear cutting tool includes a housing, a hydraulic drive assembly at least partially supported in the housing, and a head assembly coupled to the housing. The housing has a first end and a second end and a handle extends from the housing between the first and second ends. A trigger is supported in the handle. The hydraulic drive assembly is activated by the trigger. The hydraulic drive assembly includes a motor, a pump operably coupled to the motor, a tool bladder that contains hydraulic fluid and is in fluid communication with the pump, a hydraulic cylinder, a piston disposed in the hydraulic cylinder and slidable relative to the hydraulic cylinder between start and end positions, and a ram coupled to the piston. The head assembly is coupled to the second end of the housing. The head assembly includes a clevis that has a die pocket and a track adjacent the die pocket. A stationary die is supported in the die pocket and a movable die is supported in the track and slidable relative to the stationary die. The movable die is couplable to the ram. A plurality of extensions are coupled to the clevis and a stop plate is coupled to the extensions. The stop plate has a lower face that, together with the support portion of the clevis the first end of the housing, at least partially define a support plane. A clamp arm extends from the clevis opposite the plurality of extensions. A worklight is supported in the housing.

The present disclosure provides, in another aspect, a shear cutting tool configured to perform a shear cutting operation on a workpiece by sliding a movable die relative to a stationary die along a shear plane, the cutting tool comprising:
a housing having a first end and a second end and a base portion, the housing having a handle extending therefrom, the handle supporting a trigger;
a hydraulic drive assembly at least partially supported in the housing and activated by the trigger, the hydraulic drive assembly configured to move the movable die relative to the stationary die; and
a head assembly coupled to the housing at the second end, the head assembly including
a clevis configured to support the movable die and the stationary die, the clevis defining a support portion,
   a plurality of extensions coupled to the clevis, and
   a stop plate defining a lower face, the stop plate coupled to the plurality of extensions,
wherein the lower face, the support portion, and the base portion at least partially define a support plane.

The stop plate may include a strut window disposed in an axial direction of the workpiece, wherein a distance from the support plane to the strut window in a direction normal to the support plane may be about 1.625 inches.

The stop plate may define an outer face, an interface between the movable die and the stationary die may define the shear plane, and a cutting distance from the shear plane to the outer face in a first direction along an axis of the workpiece may be about 4 inches.

The stationary die may define a cutout having a workpiece profile, the cutout may be configured to receive a strut, the cutout may have a lead edge that is closer to the hydraulic drive assembly than to an end of the head assembly, the stop plate may have a support edge that is offset from the lead edge in a second direction parallel to the shear plane.

The support edge may be offset in the second direction away from the hydraulic drive assembly.

The handle may have a rear end, the handle defining a grippable length between the trigger and the rear end and configured to be gripped by a user, the grippable length may be greater than 85 millimeters.

The shear cutting tool may have a center of gravity, the handle may define a grip portion, the center of gravity positioned below the grip portion.

The shear cutting tool may further comprise a clamp arm extending from the clevis in a direction opposite the extensions.

The clevis may include a die pocket in which the stationary die is supported, the die pocket having a plurality of walls joined at a plurality of arcuate surfaces, at least one arcuate surface of the plurality of arcuate surfaces having a different radius than at least one other arcuate surface of the plurality of arcuate surfaces.

The clevis may comprise a ferrous material.

The housing may include a battery pack support portion adjacent the handle.

The present disclosure provides, in another aspect, a shear cutting tool configured to perform a shear cutting operation on a workpiece by sliding a movable die relative to a stationary die, the shear cutting tool comprising:
a housing having a first end and a second end, the housing having a handle extending therefrom, the handle supporting a trigger;
a hydraulic drive assembly including a ram, the hydraulic drive assembly at least partially supported in the housing and activated by the trigger, the hydraulic drive assembly configured to move the movable die relative to the stationary die;
a head assembly coupled to the housing at the second end, the head assembly including a clevis configured to support the movable die and the stationary die, the clevis defining a support portion; and
a coupling assembly coupled to the ram, the coupling assembly selectively engageable with the movable die, the coupling assembly including
a return arm from which a return pin configured to engage the movable die extends, a shoulder bolt coupling the return arm to the ram, and
a spring engaging the shoulder bolt and the return arm and biasing the return arm into a lower position.

The return arm may include a counterbore extending from an outer face, the shoulder bolt disposed in the counterbore, the shoulder bolt having a bolt head that is substantially flush with or recessed in the counterbore, the spring disposed in the counterbore and engaging the bolt head.

The present disclosure provides, in another aspect, a shear cutting tool configured to perform a shear cutting operation on a workpiece by sliding a movable die relative to a stationary die, the shear cutting tool comprising:
a housing having a handle extending therefrom, the handle supporting a trigger;
a head assembly coupled to the housing, the head assembly including a cutting portion and configured to support the movable die and the stationary die; and
a worklight supported in the housing adjacent the head assembly and configured to direct light toward the stationary die or the movable die.

The stationary die and the movable die may define a cutting plane at a sliding interface therebetween, the worklight may be a first worklight disposed on a first side of the cutting plane, and the shear cutting tool may further comprise a second worklight supported in the housing on a second side of the cutting plane opposite the first side.

The worklight may be activated by the trigger

The shear cutting tool may further comprising a printed circuit board to which the worklight is electrically coupled, the printed circuit board configured to control operation of the worklight.

The trigger may be a dual stage trigger that is depressible from a disengaged position to a first depressed position and to a second depressed position.

Depressing the trigger to the first depressed position may activate a first operational mode of the shear cutting tool and depressing the trigger to the second depressed position may activate a second operational mode of the shear cutting tool.

The first operational mode may include operation of the worklight.

The second operational mode may include operation of a hydraulic drive assembly.

The shear cutting tool may further comprise a trigger lock supported in the handle, the trigger lock movable between a locked position and an unlocked position, the trigger lock preventing depressing of the trigger when the trigger lock is in the locked position.

The trigger lock may be slidable between the locked and unlocked positions.

The present disclosure provides, in another aspect, a shear cutting tool configured to perform a shear cutting operation on a workpiece, the shear cutting tool comprising:
a housing including a first end, a second end, and a base portion, a handle extending from the housing between the first end and the second end, and a trigger supported in the handle;
a hydraulic drive assembly at least partially supported in the housing and activated by the trigger, the hydraulic drive assembly including
a motor,
a pump operably coupled to the motor,
a tool bladder containing a hydraulic fluid, the tool bladder in fluid communication with the pump,
a hydraulic cylinder,
a piston disposed in the hydraulic cylinder and slidable relative thereto between a start position and an end position, and
a ram coupled to the piston;
a head assembly coupled to the second end, the head assembly including
a clevis having a support portion, a die pocket, and a track adjacent the die pocket,
a stationary die supported in the die pocket,
a movable die supported in the track and slidable relative to the stationary die, the movable die couplable to the ram,
a plurality of extensions coupled to the clevis, and
a stop plate defining a lower face, the stop plate coupled to the plurality of extensions, and
a clamp arm extending from the clevis opposite the extensions; and
a worklight supported in the housing adjacent the head assembly,
wherein the lower face, the support portion, and the base portion at least partially define a support plane.

Other aspects of the disclosure will become apparent by consideration of the detailed description and accompanying drawings.

### BRIEF DESCRIPTION OF THE DRAWINGS

FIG. 1 is a perspective view of a shear cutting tool according to the present disclosure.
FIG. 2 is another perspective view of the shear cutting tool according to FIG. 1.
FIG. 3 is side view of the shear cutting tool according to FIG. 1.
FIG. 4 is a section view of a portion of the shear cutting tool according to FIG. 1, including a handle, trigger, and trigger lock.
FIG. 5 is a partial section view of a portion of the shear cutting tool according to FIG. 1, including the handle, trigger, and trigger lock.
FIG. 6 is a partial section view of a portion of the shear cutting tool according to FIG. 1, further illustrating the trigger lock.
FIG. 7 is a partial section view of the shear cutting tool according to FIG. 1.
FIG. 8 is a section view of the shear cutting tool according to FIG. 1.
FIG. 9 is a perspective view of a head assembly of the shear cutting tool according to FIG. 1.
FIG. 10 is a perspective view of the head assembly of the shear cutting tool according to FIG. 1, including a stationary die.
FIG. 11 is a side view of the head assembly of the shear cutting tool according to FIG. 1, including a stationary die.
FIG. 12 is a perspective view of the head assembly of the shear cutting tool according to FIG. 1, including a movable die.
FIG. 13 is a section view of the head assembly of the shear cutting tool according to FIG. 1, including the stationary die and the movable die.
FIG. 14 is an end view of the head assembly of the shear cutting tool according to FIG. 1.
FIG. 15 is a side view of the head assembly of the shear cutting tool according to FIG. 1, including a stationary die.
FIG. 16 is a side view of the head assembly of the shear cutting tool according to FIG. 1, including the movable die.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. Finally, terms of degree, including "about," "approximately," and the like, are inclusive of the referenced value and encompass a range of plus or minus 10%.

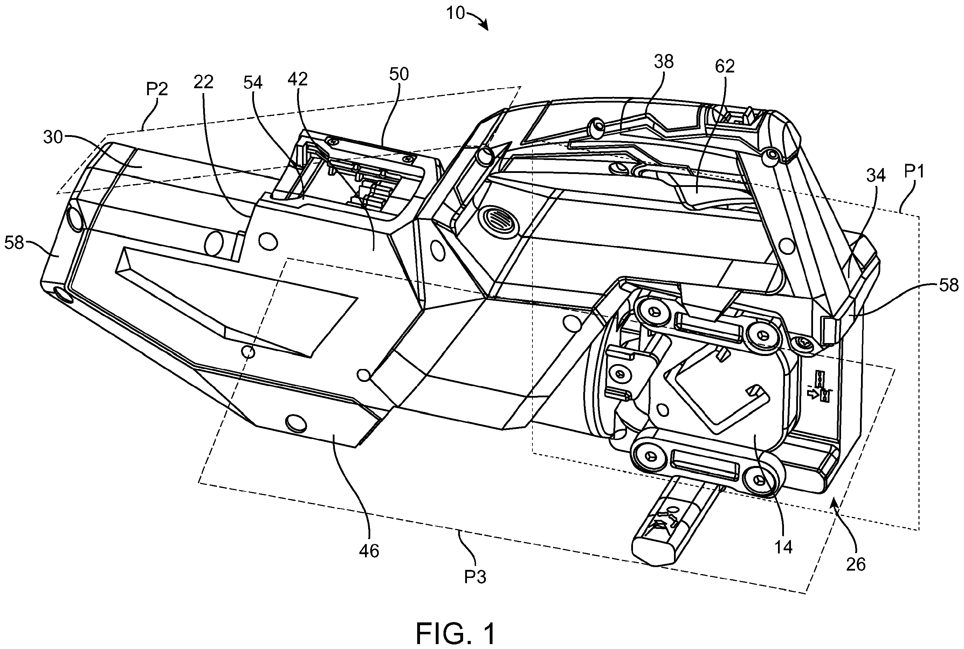

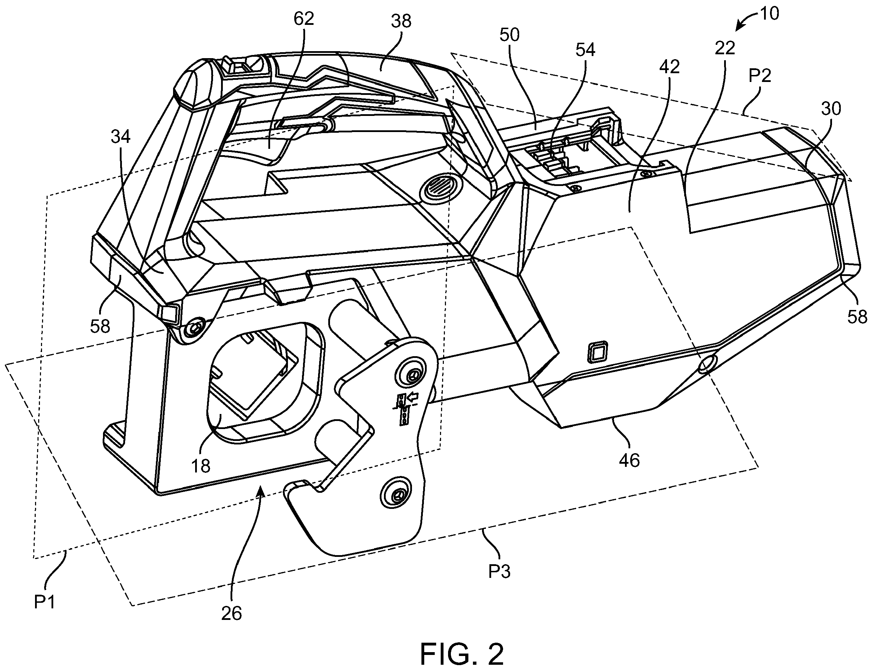

FIGS. 1 and 2 illustrate a powered cutting tool, and, more specifically, a shear cutting tool 10 useable to cut a workpiece (e.g., a metallic strut, not pictured) to a desired length by shearing the workpiece. The shearing operation is completed by sliding a movable die 14 relative to a stationary die 18, with the sliding interface of the movable die 14 and the stationary die 18 defining a shear cutting plane P1.

The shear cutting tool 10 includes a housing 22 to which a head assembly 26 is coupled. The housing 22 has a first or rear end 30 and a second or front end 34. A handle 38 extends from the second end 34 of the housing 22 and a middle portion 42 of the housing 22. The head assembly 26 is coupled to and extends from the second end 34. The housing 22 defines a base portion 46 on a side of the housing 22 opposite the middle portion 42. The base portion 46 is sufficiently wide to provide a stable base for operation of the shear cutting tool 10. The housing 22 may be formed as two clamshell halves coupled by fasteners, or may be formed in another manner.

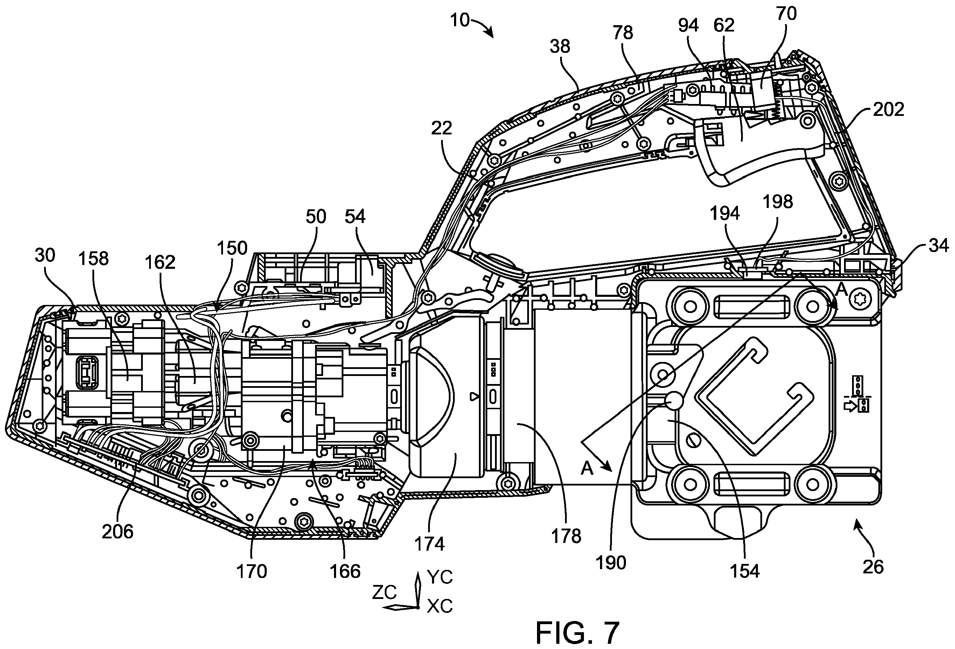

The housing 22 includes a battery pack coupling portion 50, including a terminal 54 (shown in FIG. 7), to which a rechargeable battery pack (e.g., a 4V, 12V, 18V battery pack, or a battery pack having another voltage capacity) may be mechanically and electrically removably coupled (e.g., by sliding relative to the battery pack coupling portion 50) to provide an electrical power source for the shear cutting tool 10. The battery pack coupling portion 50 is disposed in the middle portion 42 of the housing 22 adjacent the handle 38 and spaced from the first end 30. It will be appreciated that in this position, an entirety of the battery pack or at least a portion of the battery pack is positioned within a protected region between the housing 22 and a plane P2 defined by the handle 38 and first end 30 of the housing 22. In other words, the handle 38 may extend above the battery pack when the battery pack is coupled to the battery pack coupling portion 50, and the first end 30 of the housing 22 extends beyond the end of the battery pack in a length direction when the battery pack is coupled to the battery pack coupling portion 50. The housing 22 and handle 38 may therefore protect the battery pack from impacting a surface if the shear cutting tool 10 is dropped.

A protective structure 58 is coupled to the first end 30 of the housing 22. In the present embodiment, the protective structure 58 includes a damping material (e.g., an elastomer) that absorbs an impact (e.g., from dropping the tool). In other embodiments, the protective structure may include a fence or guard. In the illustrated embodiment, the shear cutting tool also includes a protective structure 58 at the second end 34. In other embodiments, the protective structure may be coupled to another portion of the tool, or may include alternative materials or structures.

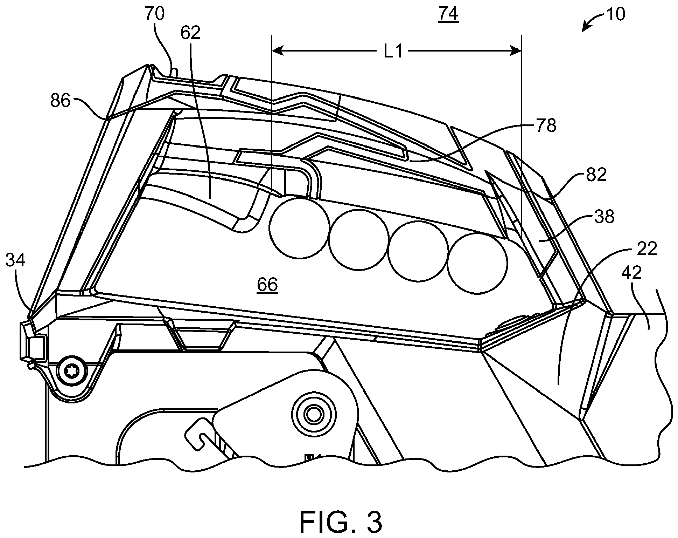

With reference to FIG. 1- 3, the handle 38 supports a trigger 62 on an interior side 66 of the handle 38 facing the housing 22 and a trigger lock 70 supported on an exterior side 74 of the handle 38 facing away from the housing 22. The handle 38 has a grip portion 78 that is grippable by a user to carry and operate the shear cutting tool 10. The grip portion 78 has a first, rear end 82 closer to the middle portion 42 of the housing 22 than to the second end 34 of the housing, and a second, front end 86 closer to the second end 34 of the housing 22 than to the middle portion 42. The trigger 62 and trigger lock 70 are supported closer to the second end 86 of the grip portion 78 than to the first end 82. The grip portion 78 defines a grippable length L1 between the trigger 62 and the first end 82 of the grip portion 78 on the interior side 66 of the handle 38. In the present embodiment, the grippable length L1 is about 95 millimeters. In other embodiments, the grippable length may be equal to or greater than about 85 millimeters. The greppable length L1 is sized to provide sufficient length for a typical user wearing a work glove to grip the grip portion 78 with all four fingers (denoted by circles in FIG. 3) without engaging the trigger 62 and thus avoiding accidental actuation of the trigger 62 of the shear cutting tool 10 when carrying the tool 10.

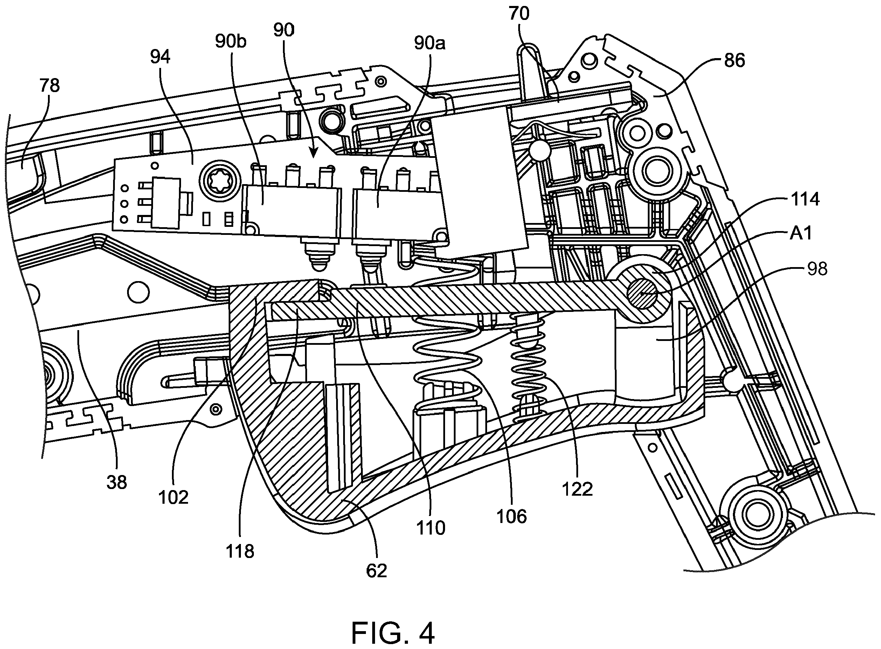

With reference to FIGS. 4-6, the trigger 62 is pivotably supported in the handle 38 and selectively engages at least one switch 90 to operate the shear cutting tool 10. In the present embodiment, the trigger 62 is a dual-stage trigger configured to activate different operational modes of the shear cutting tool 10 at different stages of the dual-stage trigger. In that regard, the trigger 62 is depressible from a first, or free position T1 (shown), to a second position T2 (i.e., a first depressed position constituting the first stage) at which a first switch 90a is engaged and activated and to a third position T3 (i.e., second depressed position constituting the second stage) at which a second switch 90b is engaged and activated. The two switches 90a, 90b are coupled to a switch printed circuit board assembly 94 ("PCBA"). The switches 90a, 90b are sequentially activated via engagement by the trigger 62. The switches are embodied as mechanical switches that are depressible to produce an output signal, with the signals corresponding to different operational modes of the tool 10. Other embodiments of switches (e.g., Hall switches, proximity sensors, etc.) may be used instead.

The trigger 62 includes a pivot portion 98 and an opposite stop portion 102. The trigger 62 is rotatably coupled via the pivot portion 98 to the second end 86 of the grip portion 78 of the handle 38. A biasing member 106 (e.g., a compression spring) is coupled to the trigger 62 and the handle 38 and biases the trigger 62 to the first position T1. The biasing member may instead be another configuration (e.g., a torsion spring that engages the trigger and the handle) that applies a force to the trigger 62 to the bias the trigger 62 away from the handle 38.

The trigger 62 includes a switch lever 110 that is pivotably coupled at its first end 114 to the handle 38 and is at least partially enveloped by the body of the trigger 62. The trigger 62 and switch lever 110 are co-rotatable about a pivot axis A1. The second end 118 of the switch lever 110 is selectively engageable with the stop portion 102 of the trigger 62. The switch lever 110 is pivotable between a first position T4 at which the switch lever 110 does not engage one the switches 90a, and a second position T5 at which the switch lever 110 engages the switch 90a. A biasing member 122 (e.g., a compression spring) is supported between the switch lever 110 and the trigger 62. In other embodiments, the biasing member may be a torsion spring that engages the switch lever and the trigger and/or the handle and biases the switch lever to the first position. In the first position T4, the biasing member 122 applies a force to the switch lever 110 to bias the switch lever 110 away from the trigger 62 and into engagement with the stop portion 102 of the trigger 62. As the trigger 62 is depressed, the biasing member 122 continues to apply a force to the switch lever 110 to continue biasing the switch lever 110 into engagement with the stop portion 102. As the trigger 62 and switch lever 110 co-rotate, the switch lever 110 is rotated to its second position T5 and is thereby brought into contact with, and activates, the first switch 90a. As the user continues to depress the trigger 62 to its third position T3, the switch lever 110 remains in contact with the first switch 90a (i.e., in its second position T5) and the stop portion 102 of the trigger 62 disengages the switch lever 110. As the trigger 62 is released and passes through its second position T2, the stop portion 102 of the trigger 62 re-engages the switch lever 110, and the trigger 62 along with the switch lever 110 return to their respective first positions T1, T4 under the force applied by the biasing members 106, 122.

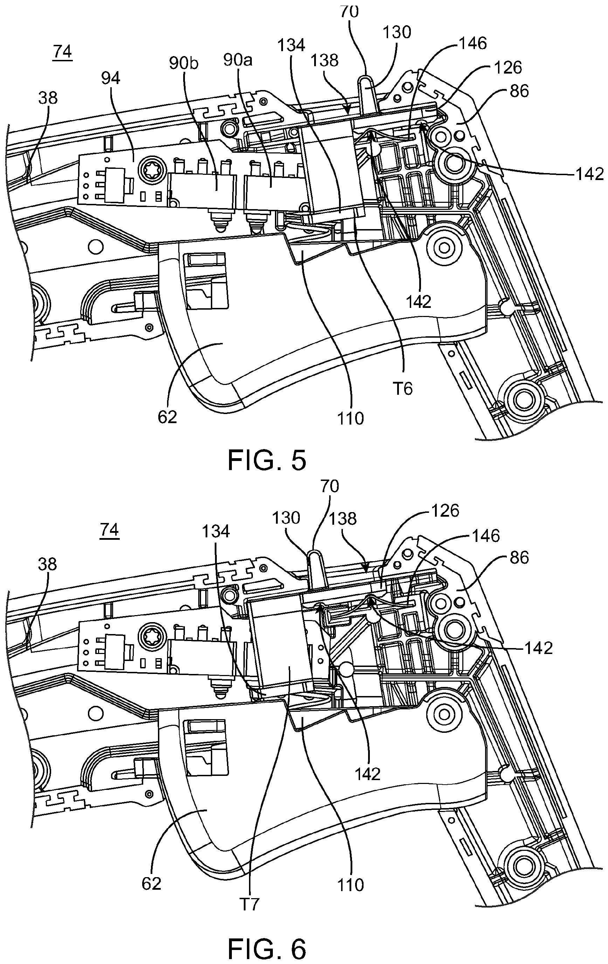

With continued reference to FIGS. 5 and 6, the trigger lock 70 is supported on the exterior side 74 of the handle 38 facing away from the housing 22. The trigger lock 70 is movable (e.g., by sliding) between an unlocked position T6 (FIG. 5), at which depression of the trigger 62 and the switch lever 110 along with it are possible, and a locked position T7 (FIG. 6) at which depression of the trigger 62 and switch lever 110 are prevented. In the present embodiment, the trigger lock 70 is slidable in a forward direction (i.e., toward the second end 34 of the housing 22) to unlock the trigger 62, and in a rearward direction (i.e., toward the first end 30 of the housing 22) to lock the trigger 62. The trigger lock 70 has a support portion 126 coupled to the handle 38 from which an interface portion 130 and a lock portion 134 extend. The interface portion 130 extends through a slot 138 in the handle 38 and is engageable by the user to move the trigger lock 70 between the unlocked and locked positions T6, T7. The support portion 126 includes recesses 142 corresponding to the locked and unlocked positions T6, T7 in which a detent 146 (e.g., a leaf spring coupled to the handle 38) is alternatively disposed to reduce the likelihood of inadvertent locking or unlocking of the trigger 62 during transportation. The lock portion 134 extends from the support portion 126 in a direction opposite the interface portion 130. In the locked position T7 (FIG. 6), the lock portion 134 engages the trigger 62 as the trigger 62 is depressed and prevents further depression of the trigger 62 to the second or third positions T2, T3.

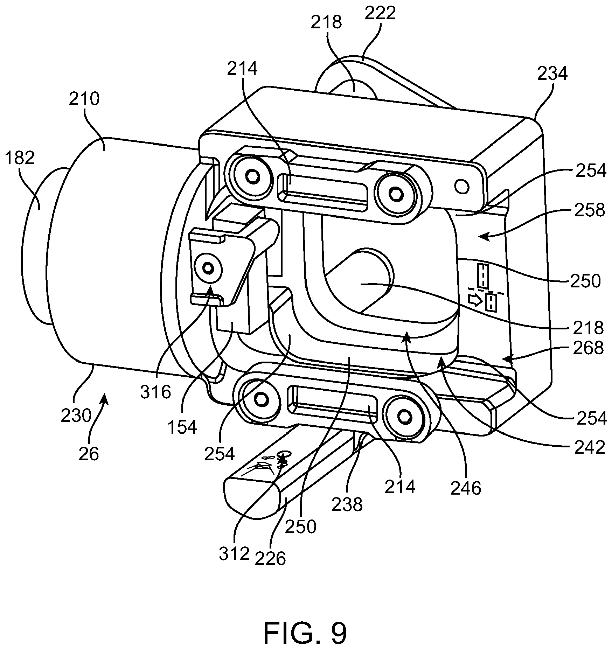

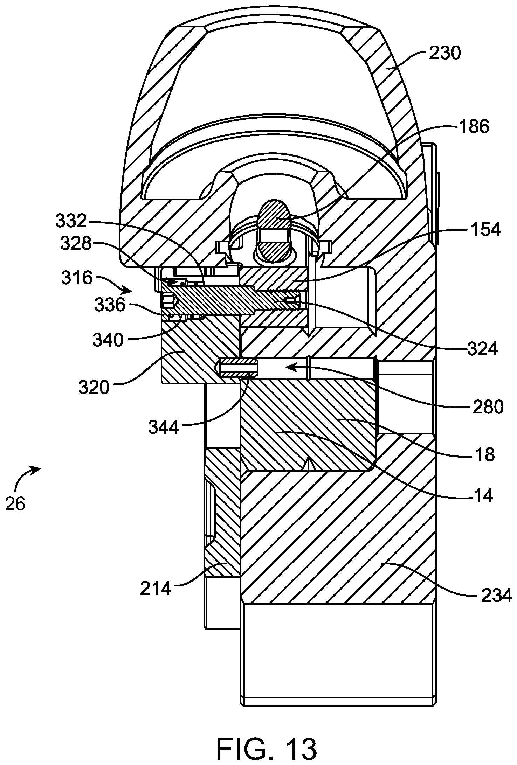

With reference to FIG. 7, the housing 22 at least partially supports a hydraulic drive assembly 150 configured to linearly advance a ram 154. In the present embodiment, the hydraulic drive assembly 150 includes a motor 158 (e.g., a brushless DC electric motor), a gear assembly 162 that receives a rotational output from the motor 158, a hydraulic system 166 including a pump 170 that receives a rotational output from the gear assembly 162, and a ram 154 coupled to the hydraulic system 166. In some embodiments, the gear assembly 162 may be omitted and the rotational output of the motor 158 provided directly to the pump 170 of the hydraulic system 166. In other embodiments, the shear cutting tool 10 may incorporate another linear advancement system, such as a rack-and-pinion, power screw, or other system, in place of the hydraulic system 166 to convert the rotational output of the motor 158 to a linear translation. In the present embodiment, the hydraulic system 166 includes a pump 170 in fluid communication with a tool bladder 174. The pump 170 transfers a hydraulic fluid from storage in the bladder 174 to a cylinder 178 in which a piston 182 (FIG. 9) is supported, and the piston 182 is translated in the cylinder 178 by the pressure of the fluid pumped into the cylinder 178, against a spring (not shown) engaging the piston 182. The ram 154 is coupled to the piston 182. In the present embodiment, illustrated in greater detail in FIG. 13, the ram 154 includes a boss 186 that extends from the body of the ram 154 that is inserted in a bore (not shown) in the piston 182 and is coupled to the piston 182 via a fastener (not shown). In other embodiments, the ram 154 may be threadedly coupled to the piston 182 without the use of a separate fastener.

Returning with reference to FIG. 7, in an operational state, that is, with a rechargeable battery pack coupled to the battery pack coupling portion 50 and movable and stationary dies 14, 18 coupled to the head assembly 26, the center of gravity 190 of the shear cutting tool 10 is aligned below the grip portion 78 of the handle 38 (shown in FIG. 7 as the rightward direction) when the shear cutting tool 10 is being carried in a horizontal position.

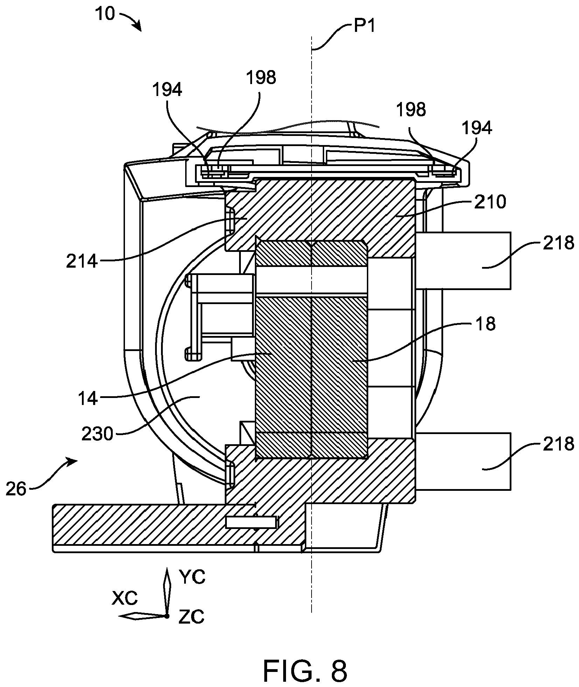

With reference to FIGS. 7 and 8, at least one worklight 194 is supported in the housing 22 adjacent the head assembly 26 to direct light toward the movable or stationary dies 14, 18 and illuminate the workpiece and facilitate positioning the workpiece at the desired cutting location. In the present embodiment, the housing 22 supports two worklights 194, with a first worklight 194 positioned on a first side of the cutting plane P1 and a second worklight 194 supported on the other side of the cutting plane P1. The worklights 194 are positioned substantially at the midpoint of the length of the movable die 14 and outward of portions of the head assembly 26 that are positioned between the worklight 194 and the movable and stationary dies 14, 18 (e.g., the die retention plates 214, discussed in further detail below). For instance, the worklights 194 may be positioned at a distance of six millimeters or more from the head assembly 26. The worklights 194 are illustrated as light-emitting diodes (LEDs) supported on a light PCBA 198. In the present embodiment, each LED is supported on a separate light PCBA 198. In other embodiments, the LEDs may be supported on one PCBA. Other quantities of LEDs and positions may be used instead. The worklight 194 is electrically coupled to another PCBA, for instance, the switch PCBA 94 (shown in FIGS. 4-6), via wires 202, and its operation is controlled by operation of the trigger 62. The worklight 194 may instead be coupled to another PCBA (e.g., a tool control unit 206, shown in FIG. 7) and controlled via that PCBA. Thus, it should be understood that the control processes described herein may be implemented via control electronics and circuitry, which may include one or more processors, non-transitory, machine-readable memory, and an input/output interface for communicating with various components of the shear cutting tool 10), across one or more of the PCBAs 94, 198, 206, which, in some embodiments, may communicate with one another via electrical wiring routed through the housing 22.

As described above, the dual-stage trigger 62 is configured to control operation of the shear cutting tool 10 (via the control electronics and circuitry on one or more of the PCBAs 94, 198, 206, as noted above) by depressing the trigger 62 from the first position T1 to the second position T2 to activate a first operational mode of the tool 10, and to the and third position T3 at which a second operational mode is activated. In the present embodiment, the first operational mode, achieved by depressing the trigger 62 from the first position T1 to the second position T2, includes activation of the worklight 194. The worklight 194 is configured to be activated for a sufficient time to facilitate guiding and aligning the workpiece at the proper cutting location, for instance, thirty seconds, however, other durations of time may be used instead. Activation of the worklight 194 is maintained through completion of the cutting operation. Depressing the trigger 62 to the third position T3 activates the second operational mode in which the cutting operation is performed by activation of the hydraulic drive assembly 150 to move the movable die 14 relative to the stationary die 18 while a workpiece is positioned in the movable and stationary dies 14, 18. In the present embodiment, the worklight 194 continues to be activated in the second operational mode.

The shear cutting tool 10 may instead, or additionally, include a proximity sensor (not pictured) configured to activate the worklight 194 when a workpiece is positioned adjacent the head assembly 26, in place of activation at the first stage of operation of the trigger 62. The proximity sensor may be a magnet sensor configured to detect the presence of a ferrous workpiece. Other sensors may be used to detect the presence of a workpiece.

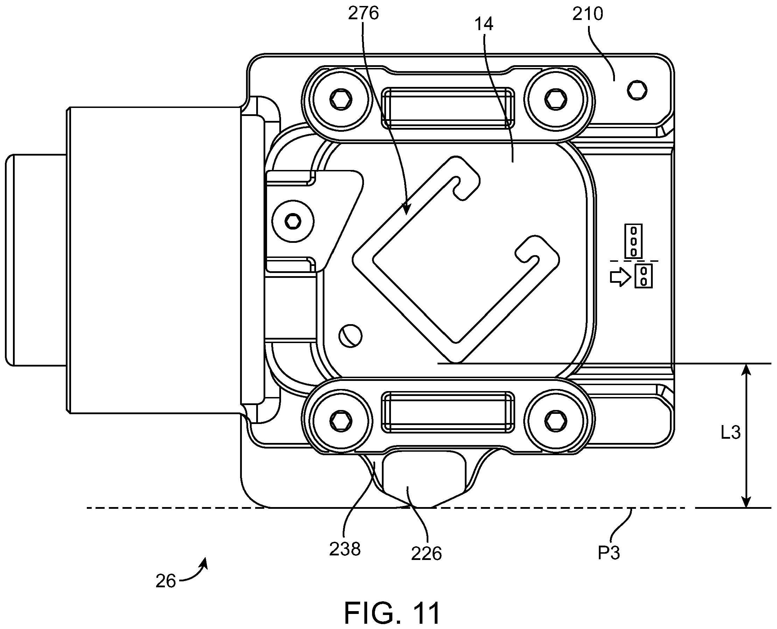

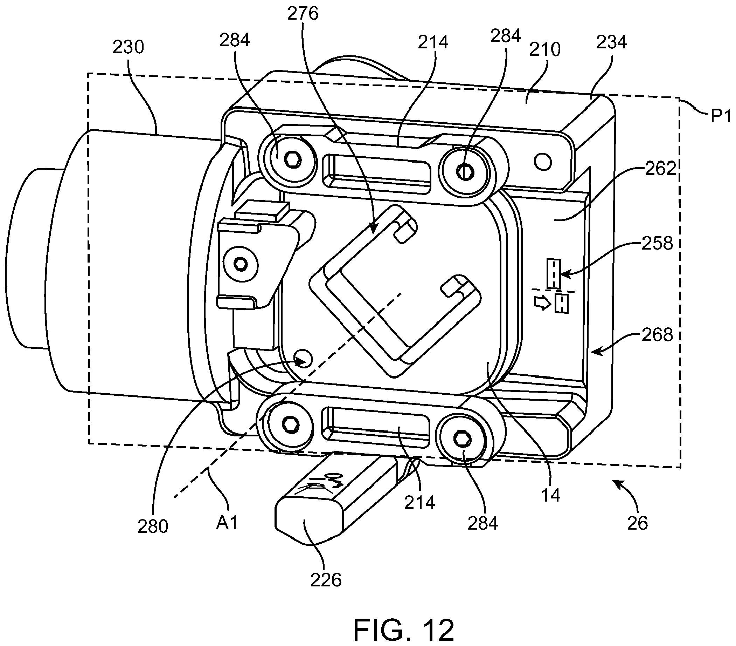

With reference to FIGS. 8-16, the head assembly is illustrated. The head assembly 26 includes a clevis 210 to which die retention plates 214 are coupled, a plurality of extensions 218 coupled to and extending from the clevis 210, a stop plate 222 coupled to the extensions 218, and a clamp arm 226 coupled to the clevis 210 and extending in a direction opposite the extensions 218. The clevis 210 supports the movable and stationary dies 14, 18.

The clevis 210 has an cylinder portion 230, a cutting portion 234 extending from the cylinder portion 230, and a support portion 238 below the cutting portion 234 (illustrated as toward the bottom of FIG. 9). The support portion 238 of the clevis 210 defines a lowermost point of the clevis 210. The cylinder portion 230 is disposed at least partially within the housing 22 and at least partially surrounds the cylinder 178. The cutting portion 234 is configured to support the movable and stationary dies 14, 18.

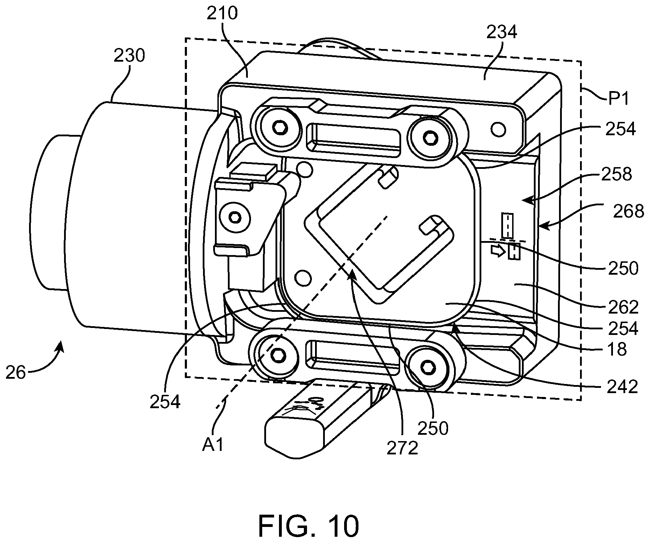

With reference to FIGS. 9 and 10, the cutting portion 234 includes a die pocket 242 in which the stationary die 18 is positioned. A strut window 246 extends from the die pocket 242 through the clevis 210. The die pocket 242 is defined by a plurality of walls 250 and has a substantially square profile and a depth generally equal to the height of the stationary die 18 for maintaining the stationary position of the stationary die 18 within and substantially flush with the die pocket 242. The stationary die 18 is configured to be slidingly inserted into the die pocket 242. The walls 250 of the die pocket 242 are joined at arcuate surfaces 254. In the present embodiment, at least one arcuate surface has a radius that is different that the radius of at least one of the other arcuate surfaces. It will be appreciated that the radii of the arcuate surfaces 254 are sized to durably accommodate the stresses imparted on the stationary die 18, which are distributed to the cutting portion 234 during the cutting operation. It will also be appreciated that different radii of the arcuate surfaces 254, which correspond to differing radii of the stationary die 18, will facilitate insertion of the stationary die 18 into the die pocket 242 in the correct orientation.

With reference to FIGS. 9-12, the clevis 210 also defines a track 258 with a surface 262 that is substantially co-planar with the cutting plane P1. The track 258 is adjacent the die pocket 242. The movable die 14 is positioned in the track 258 and is slidable in the track 258 relative to the clevis 210 and the stationary die 18 for performing cutting operations, and for insertion and removal of the movable die 14. The track 258 has an open end 268 positioned at a distal end of the cutting portion 234. The clevis 210 comprises a ferrous material, although other materials may be used. It will be appreciated that the surface 262 of the track 258 and the material composition of the clevis 210 facilitate measurement of a workpiece for aligning the workpiece and achieving the correct cut length. In that regard, a magnetic tape measure is magnetically attracted to the ferrous material of the clevis 210, allowing a user to couple the tape measure to the clevis 210, extend the tape measure with one hand, and mark a workpiece with the other hand. The substantially planar nature of the surface 262 provides a flat surface against which the tape measure can be abutted. The metallic end of the tape measure can alternatively be clipped or hooked on the flat surface 262 and the tape measure extended in an opposite direction.

The stationary die 18 has a substantially square shape and a cutout 272 corresponding to the workpiece profile extends through the stationary die 18, with the cutout 272 configured to receive a workpiece having a cross-section substantially equivalent to the workpiece profile. The cutout has a lead edge that is closer to the ram 154 than to the distal open end 268 of the clevis 210. The workpiece has a workpiece axis A1 that extends along an axial length of the workpiece. The cutout 272 is disposed in the stationary die 18 such that the workpiece axis A1 is generally axially aligned with the geometric center of the stationary die 18.

The movable die 14 has a substantially square shape. The movable die 14 has a cutout 276 that extends through the movable die 14 and corresponds to the workpiece profile of the workpiece. The cutout 276 is configured to receive a workpiece having a cross-section substantially equivalent to the workpiece profile. The workpiece profile is disposed in the movable die 14 such that the workpiece axis A1 is substantially axially aligned with the geometric center of the movable die 14. At least one coupling hole 280 extends through the movable die 14. In the present embodiment, the movable die 14 includes two coupling holes 280.

The die retention plates 214 are coupled to the clevis 210 adjacent the track 258 such that the die retention plates 214 at least partially define the track 258. In that regard, the die retention plates 214 overhang the track 258 so as to prohibit movement of the movable die 14 and stationary die 18 out of the track 258 and die pocket 242 along the workpiece axis A1. The die retention plates 214 are coupled to the clevis 210 by fasteners 284, however, other fastening methods may be used instead.

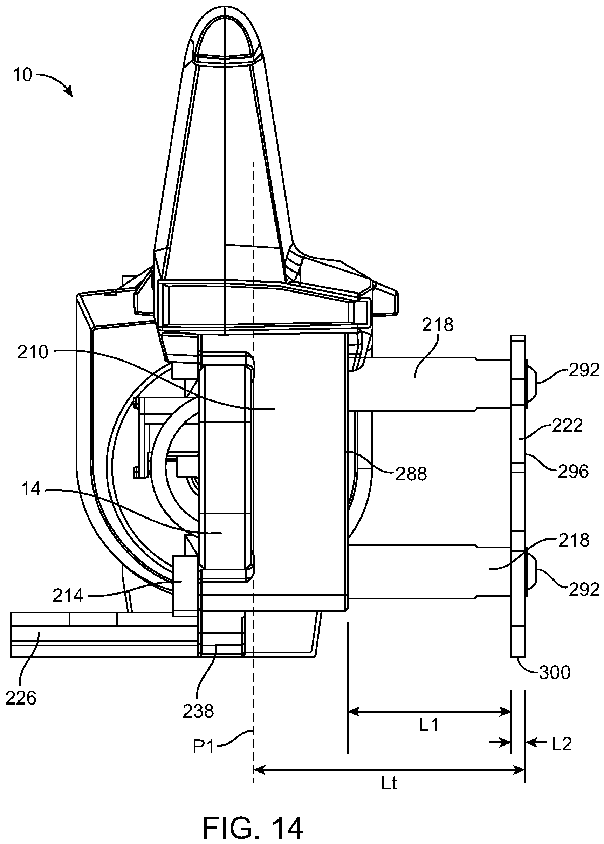

With references to FIGS. 14-16, a plurality of extensions 218 having an extension length L1 are coupled to the clevis 210 at a face 288 opposite the die retention plates 214. The extensions 218 are illustrated has having a substantially cylindrical shape, although the extensions may have another shape. The extensions 218 may be coupled to the clevis 210 via threaded rods, or may instead be formed with a threaded portion that is received by threaded holes in the clevis 210.

The stop plate 222, which has a stop plate width L2, is coupled to the plurality of extensions 218, for instance, via fasteners 292, although the stop plate may be coupled to the extensions 218 in another manner. The stop plate 222 has an outer face 296, a lower face 300, and a profile portion 304 defining a support edge 308. The outer face 296 is substantially parallel to the cutting plane P1. The support edge 308 is shaped to complement at least a portion of a cross-section of the workpiece.

The distance from the cutting plane to the outer face 296 defines a cutting length L t. The extensions 218 are sized such that the extension length L1 is optimized to account for and reflect various criteria, such as common lengths of cut workpieces, the moment applied to the workpiece as a result of the cutting operation, and/or other criteria. The cutting length L t may be about 4 inches (about 102 millimeters), about 6 inches (about 152 millimeters), or another desired amount.

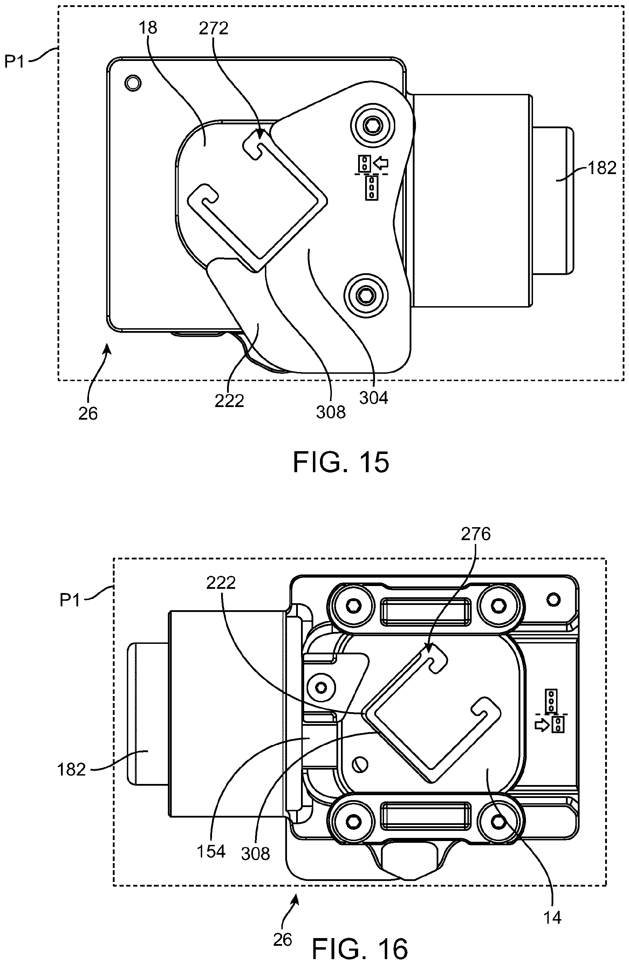

With continued reference to FIGS. 15 and 16, the positioning of the support edge 308 in comparison to the lead edge of the cutout 272 of the movable and stationary dies 14, 18 is illustrated in greater detail. The support edge 308 is offset from the lead edge in a direction that is parallel to the cutting plane P1 (e.g., a second direction that is perpendicular to a first direction defined by the workpiece axis A1). In the present embodiment, the support edge 308 is offset in a direction away from the ram 154 and piston 182 and toward the distal open end 268. In the present embodiment, the support edge 308 is offset 1.5 millimeters. It will be appreciated that offsetting the support edge 308 in this manner accounts for the load applied to the workpiece during a cutting operation. In that regard, during a cutting operation on a tool without an offset support edge, the workpiece is pushed at an angle within the cutout 272, which is generally oversized compared to the size of the workpiece to account for tolerances in the workpiece. By pushing the workpiece within the oversized cutout, the workpiece is cut at an angle. In the present embodiment, offsetting the support edge 308 of the stop plate 222, the angle of the workpiece supported by the stop plate 222, and thereby, the resulting squareness of the shear cut relative to the workpiece axis A1 (illustrated in FIGS. 15 and 16 as into/out of the page) is improved.

Returning with reference to FIGS. 1, 2, and 11, the shear cutting tool 10 is configured to be operated when placed on a work surface, for instance, a floor, a work bench, etc., independent of support of a stand. In that regard, the support portion 238, lower face 300, and base portion 46 are configured to at least partially define a support plane P3, with the support plane P3 being substantially parallel to the work surface. The shear cutting tool 10 is alternatively configured to be operated while coupled to a stand, such as a pipe stand, tripod or other independent stand having a generally V-shaped groove (not shown). In that regard, the clamp arm 226 is coupled to the support portion 238 by fasteners (not shown) and extends from the support portion 238. Alternatively, the clamp arm 226 may be formed integrally with the clevis 210. The clamp arm 226 has a generally V-shaped cross section configured to complement the V-shaped groove of a stand. The clamp arm 226 includes a hole 312 that extends through the clamp arm 226 for coupling the clamp arm 226 to a surface or stand via a fastener for more stable operation.

The distance from the support plane P3 to the lowermost point of a workpiece when positioned in the cutouts 272, 276 of the movable and stationary dies 14, 18, respectively, as measured in a direction normal to the support plane P3 defines a support distance L3. In the present embodiment, the support distance L3 is about 1.625 inches (about 41 millimeters). That is, a workpiece having a height of about 1.625 inches, for instance, the width of a strut channel, can be positioned beneath a workpiece to be cut and will provide support for the workpiece to be cut without bending of the workpiece.

Returning with reference to FIG. 13, the head assembly 26 includes a coupling assembly 316 including a return arm 320 that is coupled to the ram 154 by a fastener 324 (e.g., a shoulder bolt). The return arm 320 includes a counterbored hole 328 that extends into the body of the return arm 320. The counterbored hole 328 defines an engagement surface 332. The shoulder bolt 324 has a head 336 with a diameter that is sized to fit within the counterbored hole 328 with minimal distance between the outer diameter of the head 336 and the inner diameter of the hole 328, such that the head 336 of the shoulder bolt 324 is flush with or recessed into the counterbored hole 328. A spring 340 is disposed in the counterbored hole 328 between the head 336 of the shoulder bolt 324 and the surface 332 of the counterbored hole 328 to bias the return arm 320 downward and toward the movable die 14. The return arm 320 includes a pin 344 that extends from the return arm 320 and is selectively disposed in the hole 312 of the movable die 14 to couple the movable die 14 for movement with the ram 154. As a result of the biasing force of the spring 340 on the return arm 320, the pin 344 is biased to a first, or lower position, that is, into the hole 312, and the user has to apply a force (i.e., pull) the return arm 320 out to a second, or raised position (not shown) to disengage the pin 344 from the hole 312 of the movable die 14.

The movable die 14 is engaged by the ram 154 and is coupled to the ram 154 via the coupling assembly 316. When the coupling assembly 316 is not engaged with the movable die 14, the movable die 14 can slide in the track 258 relative to the clevis 210 for removal from the clevis 210. The stationary die 18 can be removed from the die pocket 242 and track 258 in a similar manner once the movable die 14 has been removed from the track 258. In this manner, replacement of the movable die 14 and stationary die 18 can be completed by hand, that is, without the use of hand tools.

When the piston 182 and ram 154 are moved from the start position to the end position by the hydraulic drive assembly 150, the ram 154 engages the movable die 14 and causes it to slide relative to the stationary die 18 in a cutting direction along the cutting plane P1. When the piston 182 and ram 154 return to the start position, for instance, upon completion of a cutting operation, the engagement of the pin 344 in the hole 312 of the movable die 14 results in the movable die 14 returning to the start position with the piston 182 and ram 154. To replace the movable die 14, the return arm 320 is pulled by the user to the raised position to disengage the pin 344 from the hole 312, allowing the movable die 14 to be moved along the track 258 independent of the return arm 320, ram 154, and piston 182, and removed through the open end 268 of the track 258.

Various features of the invention are set forth in the following claims. When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. A shear cutting tool configured to perform a shear cutting operation on a workpiece by sliding a movable die relative to a stationary die along a shear plane, the cutting tool comprising:
   a housing having a first end and a second end and a base portion, the housing having a handle extending therefrom, the handle supporting a trigger;
   a hydraulic drive assembly at least partially supported in the housing and activated by the trigger, the hydraulic drive assembly configured to move the movable die relative to the stationary die; and
   a head assembly coupled to the housing at the second end, the head assembly including
   a clevis configured to support the movable die and the stationary die, the clevis defining a support portion,
      a plurality of extensions coupled to the clevis, and
      a stop plate defining a lower face, the stop plate coupled to the plurality of extensions,
   wherein the lower face, the support portion, and the base portion at least partially define a support plane.
2. The shear cutting tool of clause 1, wherein the stop plate includes a strut window disposed in an axial direction of the workpiece, wherein a distance from the support plane to the strut window in a direction normal to the support plane is about 1.625 inches.
3. The shear cutting tool of clause 1, wherein the stop plate defines an outer face, an interface between the movable die and the stationary die defines the shear plane, and a cutting distance from the shear plane to the outer face in a first direction along an axis of the workpiece is about 4 inches.
4. The shear cutting tool of clause 2, wherein the stationary die defines a cutout having a workpiece profile, the cutout configured to receive a strut, the cutout having a lead edge that is closer to the hydraulic drive assembly than to an end of the head assembly, the stop plate having a support edge that is offset from the lead edge in a second direction parallel to the shear plane.
5. The shear cutting tool of clause 4, wherein the support edge is offset in the second direction away from the hydraulic drive assembly.
6. The shear cutting tool of clause 1, wherein the handle has a rear end, the handle defining a grippable length between the trigger and the rear end and configured to be gripped by a user, the grippable length being greater than 85 millimeters.
7. The shear cutting tool of clause 1, wherein the shear cutting tool has a center of gravity, the handle defines a grip portion, the center of gravity positioned below the grip portion.
8. The shear cutting tool of clause 1, further comprising a clamp arm extending from the clevis in a direction opposite the extensions.
9. The shear cutting tool of clause 1, wherein the clevis includes a die pocket in which the stationary die is supported, the die pocket having a plurality of walls joined at a plurality of arcuate surfaces, at least one arcuate surface of the plurality of arcuate surfaces having a different radius than at least one other arcuate surface of the plurality of arcuate surfaces.
10. The shear cutting tool of clause 1, wherein the clevis comprises a ferrous material.
11. The shear cutting tool of clause 1, wherein the housing includes a battery pack support portion adjacent the handle.
12. A shear cutting tool configured to perform a shear cutting operation on a workpiece by sliding a movable die relative to a stationary die, the shear cutting tool comprising:
   a housing having a first end and a second end, the housing having a handle extending therefrom, the handle supporting a trigger;
   a hydraulic drive assembly including a ram, the hydraulic drive assembly at least partially supported in the housing and activated by the trigger, the hydraulic drive assembly configured to move the movable die relative to the stationary die;
   a head assembly coupled to the housing at the second end, the head assembly including a clevis configured to support the movable die and the stationary die, the clevis defining a support portion; and
   a coupling assembly coupled to the ram, the coupling assembly selectively engageable with the movable die, the coupling assembly including
   a return arm from which a return pin configured to engage the movable die extends, a shoulder bolt coupling the return arm to the ram, and
   a spring engaging the shoulder bolt and the return arm and biasing the return arm into a lower position.
13. The shear cutting tool of clause 12, wherein the return arm includes a counterbore extending from an outer face, the shoulder bolt disposed in the counterbore, the shoulder bolt having a bolt head that is substantially flush with or recessed in the counterbore, the spring disposed in the counterbore and engaging the bolt head.
14. A shear cutting tool configured to perform a shear cutting operation on a workpiece by sliding a movable die relative to a stationary die, the shear cutting tool comprising:
   a housing having a handle extending therefrom, the handle supporting a trigger;
   a head assembly coupled to the housing, the head assembly including a cutting portion and configured to support the movable die and the stationary die; and
   a worklight supported in the housing adjacent the head assembly and configured to direct light toward the stationary die or the movable die.
15. The shear cutting tool of clause 14, wherein the stationary die and the movable die define a cutting plane at a sliding interface therebetween, the worklight is a first worklight disposed on a first side of the cutting plane, and the shear cutting tool further comprises a second worklight supported in the housing on a second side of the cutting plane opposite the first side.
16. The shear cutting tool of clause 14, wherein the worklight is activated by the trigger.
17. The shear cutting tool of clause 14, further comprising a printed circuit board to which the worklight is electrically coupled, the printed circuit board configured to control operation of the worklight.
18. The shear cutting tool of clause 14, wherein the trigger is a dual stage trigger that is depressible from a disengaged position to a first depressed position and to a second depressed position.
19. The shear cutting tool of clause 18, wherein depressing the trigger to the first depressed position activates a first operational mode of the shear cutting tool and depressing the trigger to the second depressed position activates a second operational mode of the shear cutting tool.
20. The shear cutting tool of clause 19, wherein the first operational mode includes operation of the worklight.
21. The shear cutting tool of clause 19, wherein the second operational mode includes operation of a hydraulic drive assembly.
22. The shear cutting tool of clause 14, further comprising a trigger lock supported in the handle, the trigger lock movable between a locked position and an unlocked position, the trigger lock preventing depressing of the trigger when the trigger lock is in the locked position.
23. The shear cutting tool of clause 22 wherein the trigger lock is slidable between the locked and unlocked positions.
24. A shear cutting tool configured to perform a shear cutting operation on a workpiece, the shear cutting tool comprising:
   a housing including a first end, a second end, and a base portion, a handle extending from the housing between the first end and the second end, and a trigger supported in the handle;
   a hydraulic drive assembly at least partially supported in the housing and activated by the trigger, the hydraulic drive assembly including
   a motor,
   a pump operably coupled to the motor,
   a tool bladder containing a hydraulic fluid, the tool bladder in fluid communication with the pump,
   a hydraulic cylinder,
   a piston disposed in the hydraulic cylinder and slidable relative thereto between a start position and an end position, and
   a ram coupled to the piston;
   a head assembly coupled to the second end, the head assembly including
   a clevis having a support portion, a die pocket, and a track adjacent the die pocket,
   a stationary die supported in the die pocket,
   a movable die supported in the track and slidable relative to the stationary die, the movable die couplable to the ram,
   a plurality of extensions coupled to the clevis, and
   a stop plate defining a lower face, the stop plate coupled to the plurality of extensions, and
   a clamp arm extending from the clevis opposite the extensions; and
   a worklight supported in the housing adjacent the head assembly,
   wherein the lower face, the support portion, and the base portion at least partially define a support plane.

## Claims

1. A shear cutting tool configured to perform a shear cutting operation on a workpiece by sliding a movable die relative to a stationary die along a shear plane, the cutting tool comprising:
a housing having a first end and a second end and a base portion, the housing having a handle extending therefrom, the handle supporting a trigger;
a hydraulic drive assembly at least partially supported in the housing and activated by the trigger, the hydraulic drive assembly configured to move the movable die relative to the stationary die; and
a head assembly coupled to the housing at the second end, the head assembly including
a clevis configured to support the movable die and the stationary die, the clevis defining a support portion,
a plurality of extensions coupled to the clevis, and
a stop plate defining a lower face, the stop plate coupled to the plurality of extensions,
wherein the lower face, the support portion, and the base portion at least partially define a support plane.

2. The shear cutting tool of claim 1, wherein the stop plate includes a strut window disposed in an axial direction of the workpiece, wherein a distance from the support plane to the strut window in a direction normal to the support plane is about 1.625 inches, and/or wherein the stop plate defines an outer face, an interface between the movable die and the stationary die defines the shear plane, and a cutting distance from the shear plane to the outer face in a first direction along an axis of the workpiece is about 4 inches.

3. The shear cutting tool of claim 1 or 2, wherein the stationary die defines a cutout having a workpiece profile, the cutout configured to receive a strut, the cutout having a lead edge that is closer to the hydraulic drive assembly than to an end of the head assembly, the stop plate having a support edge that is offset from the lead edge in a second direction parallel to the shear plane, preferably wherein the support edge is offset in the second direction away from the hydraulic drive assembly.

4. The shear cutting tool of any preceding claim, wherein the handle has a rear end, the handle defining a grippable length between the trigger and the rear end and configured to be gripped by a user, the grippable length being greater than 85 millimeters, and/or wherein the shear cutting tool has a center of gravity, the handle defines a grip portion, the center of gravity positioned below the grip portion.

5. The shear cutting tool of any preceding claim, further comprising a clamp arm extending from the clevis in a direction opposite the extensions.

6. The shear cutting tool of any preceding claim, wherein the clevis includes a die pocket in which the stationary die is supported, the die pocket having a plurality of walls joined at a plurality of arcuate surfaces, at least one arcuate surface of the plurality of arcuate surfaces having a different radius than at least one other arcuate surface of the plurality of arcuate surfaces, and/or wherein the clevis comprises a ferrous material, and/or wherein the housing includes a battery pack support portion adjacent the handle.

7. A shear cutting tool configured to perform a shear cutting operation on a workpiece by sliding a movable die relative to a stationary die, the shear cutting tool comprising:
a housing having a first end and a second end, the housing having a handle extending therefrom, the handle supporting a trigger;
a hydraulic drive assembly including a ram, the hydraulic drive assembly at least partially supported in the housing and activated by the trigger, the hydraulic drive assembly configured to move the movable die relative to the stationary die;
a head assembly coupled to the housing at the second end, the head assembly including a clevis configured to support the movable die and the stationary die, the clevis defining a support portion; and
a coupling assembly coupled to the ram, the coupling assembly selectively engageable with the movable die, the coupling assembly including
a return arm from which a return pin configured to engage the movable die extends, a shoulder bolt coupling the return arm to the ram, and
a spring engaging the shoulder bolt and the return arm and biasing the return arm into a lower position.

8. The shear cutting tool of claim 7, wherein the return arm includes a counterbore extending from an outer face, the shoulder bolt disposed in the counterbore, the shoulder bolt having a bolt head that is substantially flush with or recessed in the counterbore, the spring disposed in the counterbore and engaging the bolt head.

9. A shear cutting tool configured to perform a shear cutting operation on a workpiece by sliding a movable die relative to a stationary die, the shear cutting tool comprising:
a housing having a handle extending therefrom, the handle supporting a trigger;
a head assembly coupled to the housing, the head assembly including a cutting portion and configured to support the movable die and the stationary die; and
a worklight supported in the housing adjacent the head assembly and configured to direct light toward the stationary die or the movable die.

10. The shear cutting tool of claim 9, wherein the stationary die and the movable die define a cutting plane at a sliding interface therebetween, the worklight is a first worklight disposed on a first side of the cutting plane, and the shear cutting tool further comprises a second worklight supported in the housing on a second side of the cutting plane opposite the first side, and/or wherein the worklight is activated by the trigger, and/or further comprising a printed circuit board to which the worklight is electrically coupled, the printed circuit board configured to control operation of the worklight.

11. The shear cutting tool of claim 9 or 10, wherein the trigger is a dual stage trigger that is depressible from a disengaged position to a first depressed position and to a second depressed position.

12. The shear cutting tool of claim 11, wherein depressing the trigger to the first depressed position activates a first operational mode of the shear cutting tool and depressing the trigger to the second depressed position activates a second operational mode of the shear cutting tool.

13. The shear cutting tool of claim 12, wherein the first operational mode includes operation of the worklight, and/or wherein the second operational mode includes operation of a hydraulic drive assembly.

14. The shear cutting tool of any one of claims 9 to 13, further comprising a trigger lock supported in the handle, the trigger lock movable between a locked position and an unlocked position, the trigger lock preventing depressing of the trigger when the trigger lock is in the locked position, preferably wherein the trigger lock is slidable between the locked and unlocked positions.

15. A shear cutting tool configured to perform a shear cutting operation on a workpiece, the shear cutting tool comprising:
a housing including a first end, a second end, and a base portion, a handle extending from the housing between the first end and the second end, and a trigger supported in the handle;
a hydraulic drive assembly at least partially supported in the housing and activated by the trigger, the hydraulic drive assembly including
a motor,
a pump operably coupled to the motor,
a tool bladder containing a hydraulic fluid, the tool bladder in fluid communication with the pump,
a hydraulic cylinder,
a piston disposed in the hydraulic cylinder and slidable relative thereto between a start position and an end position, and
a ram coupled to the piston;
a head assembly coupled to the second end, the head assembly including
a clevis having a support portion, a die pocket, and a track adjacent the die pocket,
a stationary die supported in the die pocket,
a movable die supported in the track and slidable relative to the stationary die, the movable die couplable to the ram,
a plurality of extensions coupled to the clevis, and
a stop plate defining a lower face, the stop plate coupled to the plurality of extensions, and
a clamp arm extending from the clevis opposite the extensions; and
a worklight supported in the housing adjacent the head assembly,
wherein the lower face, the support portion, and the base portion at least partially define a support plane.
